# EUROPEAN PATENT APPLICATION

(11) **EP 4 390 517 A1**
(43) Date of publication of application: **26.06.2024**
(21) Application number: 22216587.0
(22) Date of filing: 23.12.2022
(51) Int. Cl.: G02C 7/02

(54) **SPECTACLE LENS DESIGN DATA AND METHOD FOR MANUFACTURING A SPECTACLE LENS**

(71) Applicant: Carl Zeiss Vision International GmbH, 73430 Aalen (DE)
(72) Inventor: JESTER, Philipp, 89520 Heidenheim a.d. Brenz (DE); GERLACH, Mario, 16548 Glienicke-Nordbahn (DE)
(74) Representative: Tautz & Schuhmacher

(57) **Abstract**

Provided is a spectacle lens, comprising a clear region arranged in the center of the spectacle lens having a focal power adjusted to provide emmetropia, and a ring-shaped diffractive power region having a diffractive add power providing a focal power deviating from the focal power of the central region. The spectacle lens is characterized in further comprising a refractive power region arranged radially outside of the diffractive power region having a refractive power providing a focal power deviating from the focal power of the clear region.

## Description

Provided are embodiments of a spectacle lens design data for the purpose of a use of the spectacle lens design data for a manufacture of a spectacle lens related to a wearer, a data set in the form of a computer-readable data signal, a data signal carrying the data set according to the disclosure, a computer-implemented method for designing a spectacle lens, a method for manufacturing a spectacle lens, and a spectacle lens related to a wearer. The embodiments are, thus, related to spectacle lenses.

Myopia, i.e., nearsightedness, can be observed to be on the increase worldwide. In Asia, in particular, a particularly large increase in the number of people with nearsightedness is to be observed. Myopia denotes a refractive error in which the image of an object located at infinite distance arises in a plane in front of the retina in the case of a relaxed accommodation of the eye and the light falling onto the retina correspondingly represents an out-of-focus image. Often, myopia is a refractive error that deteriorates over time by virtue of the ametropic eye becoming ever longer over time and the image plane therefore distancing itself ever further from the retina.

The etiology of myopia is considered to have many factors and the mechanisms of the errant axial length growth of the eyeball are still not comprehensively understood. Therefore, myopia previously has been regarded as incurable or irreversible. Here, correcting myopia by means of spectacle lenses or refractive corneal surgery may be considered as fighting the symptoms since the errant axial length growth of the eyeball is not reversed.

Lenses for myopia control are typically finished single vision (FSV) lenses, which are also referred to as "stock lenses", or individually optimized Rx lenses, which have a front surface being designed for special myopia control treatment, and a back surface being designed to fulfill the requirements of the prescription for the wearer and may for example have a spheric or toric geometry. A special case of myopia control lenses are lenses with structures, e.g., lenslets or micro cylinder lenses. Such lenses typically have a narrow central zone for clear vision, while the periphery is blurred. The base for the structures on the front surface is typically a sphere or, if so, an aspheric surface, that is optimized for one or in some cases even more discrete spherical prescriptions. The term "aspheric surface" is to be understood as a surface of revolution having continuously variable curvature over all or part of its area (see section 3.4.3 of ISO 1366:2019(E)). The narrow central zone for clear vision typically comes along with a steep power increase at the border of the clear zone for achieving the blurred periphery. This power increase, however, often comes along with an aesthetically undesirable strong increase of power and/or an aesthetically undesirable surface profile of the spectacle lens required for achieving the strong increase of power.

WO 2004/107024 A1 describes a method and an apparatus for controlling optical aberrations to alter modulation transfer functions by providing an ocular system comprising a predetermined corrective factor to produce substantially corrective stimuli for repositioning medium- and high-spatial frequency peaks relative to one another to alter accommodative lag.

WO 2005/055891 A1 describes a method and an apparatus for controlling optical aberrations to alter a relative curvature of a field.

WO 2006/124198 A1 describes a multifocal ophthalmic lens including a lens element having anterior and posterior surfaces with a central aspherical refractive zone disposed on one of the anterior and posterior surfaces, and a diffractive bifocal zone disposed outside of the aspherical refractive zone. The central aspherical refractive zone may be disposed on the anterior surface and the diffractive bifocal zone may be disposed on the posterior surface.

WO 2014/198972 A1 describes a lens that can be implemented both as a contact lens and as an intraocular lens, the thickness of the lens being in both cases obtained by an iteration process and being dependent on an aperiodic and ordered staircase function Gs(u), where S is the number of iterations and is equal to or lower than 2. The contact lens is used in the control of myopia. The lens production method starts from a given refractive lens and includes modifying the surface of the lens by means of the staircase function Gs(u), where S is equal to or lower than 2.

WO 2021/181304 A1 describes an ophthalmic lens for treating myopia comprising: a base lens with a front surface, a back surface, and a first power profile selected to correct or substantially correct for a distance refractive error of the eye; one or more myopia control elements on at least one of the front and back surfaces of the lens; a first viewing zone having a dimension selected based, at least in part, on a concentration of a pharmaceutical agent for use in conjunction with an ophthalmic lens, the first viewing zone being configured to minimize, reduce and/or eliminate vision disturbances for distance vision; and a second viewing zone comprising a power profile that is relatively more positive compared to the first viewing zone; wherein at least one of the size of the second viewing zone and the relatively more positive power of the second viewing zone is selected based, at least in part, on the concentration of the pharmaceutical agent. The lens appears to be used in combination with medication.

US 7,073,906 B1, which is considered as closest prior art, describes a multifocal ophthalmic lens including a lens element having anterior and posterior surfaces with a central aspherical refractive zone disposed on one of the anterior and posterior surfaces, and a diffractive bifocal zone disposed outside of the aspherical refractive zone. The central aspherical refractive zone may be disposed on the anterior surface and the diffractive bifocal zone may be disposed on the posterior surface. A peripheral zone outside diffractive bifocal annulus is provided primarily for far vision but can be aspherical one to compensate for the aberration arising at the eye periphery or to provide additional intermediate performance to compliment central aspherical and diffractive annulus areas.

In view of the closest prior art, the objective technical problem may relate to providing a spectacle lens suitable for mitigating myopia and/or for slowing down the progress of myopia.

This problem is solved by spectacle lens, a data set in the form of a computer-readable data signal, a computer-readable storage medium having stored thereon a data set according to the disclosure, and a method for generating a spectacle lens design data having the features of the respective independent claim. Optional embodiments and features are provided in the dependent claims and the description.

Provided is a spectacle lens, comprising a clear region arranged in the center of the spectacle lens having a focal power adjusted to provide emmetropia, and a ring-shaped diffractive power region having a diffractive add power providing a focal power deviating from the focal power of the central region. The spectacle lens is characterized in further comprising a refractive power region arranged radially outside of the diffractive power region having a refractive power providing a focal power deviating from the focal power of the clear region.

A solution for the problem described above is achieved in full by the features described in the foregoing paragraph.

However, a skilled person starting from the closest prior art with the task of solving the objective technical problem would merely alter the diffractive region to provide a defocus and to extend until the edge of the spectacle lens to provide a defocus for larger viewing angles compared to the viewing angles associated with the central region. This would solve the objective technical problem but deviate from the subject-matter of claim 1 and does not render the subject-matter of claim 1 obvious.

Furthermore, a data set in the form of a computer-readable data signal comprising at least one kind of the following kinds of data is provided: (i) a virtual representation of the spectacle lens configured for the purpose of use for manufacturing the spectacle lens according to any one of the preceding claims; and (ii) data containing computer-readable instructions for controlling one or more manufacturing machines to manufacture the spectacle lens according to any one of the preceding claims.

In addition, a computer readable storage medium having stored thereon a data set according to the disclosure is provided.

Moreover, a method being configured for generating by computer means a spectacle lens design data for a spectacle lens is provided, such that the spectacle lens comprises a clear region arranged in the center of the spectacle lens having a focal power adjusted to provide emmetropia, and a ring-shaped diffractive power region having a diffractive add power providing a focal power deviating from the focal power of the central region, characterized in further comprising a refractive power region arranged radially outside of the diffractive power region having a refractive power providing a focal power deviating from the focal power of the clear region.

Additionally or alternatively, a data processing device comprising a processor configured to perform the above described method at least partly may be provided.

In other words, a data processing system comprising a processor and a storage medium coupled to the processor may be provided, wherein the processor is adapted to perform the above described method at least partly based on a computer program stored on the storage medium.

The data processing device or system may be a digital electronic machine that can be programmed to carry out sequences of arithmetic or logical operations (computation) automatically. These logical operations may be defined by the above-described method at least partly.

The data processing device may be a computer. The term computer may refer to general-purpose devices like personal computers (PC) and mobile devices like smartphones and tablets. However, the term computer is not limited to a single device. Instead, the term computer should be interpreted in a broad manner including all data processing devices configured to or being suitable to carry out the above described method, alone or in combination with other (data processing) devices, at least partly. Therefore, the term computer may also refer to a group of computers that are linked and function together, such as a computer network or computer cluster.

The data processing device may comprise at least one processor or processing element, e.g., a central processing unit (CPU) (optionally in the form of a microprocessor). The data processing device may comprise a computer memory, optionally a semiconductor memory chips. The processor may be configured to carry out a computer program. The computer program may be stored on the computer memory. The data processing device may include may be configured to be connect to one or more peripheral devices, e.g., including at least one of an input device (e.g., a keyboard, a mouse, a joystick, etc.), an output device (a monitor screen, a printer, etc.), and input/output devices that perform both functions (e.g., a touchscreen). The peripheral device may allow information to be retrieved from an external source, such as an operator of the computer, and they enable the result of operations to be saved and retrieved.

The above given description with respect to the method applies mutatis mutandis to the data processing device and vice versa.

Additionally or alternatively, a computer program comprising instructions which, when the program is executed by a computer, cause the computer to carry out the above described method at least partly may be provided.

A computer program may be defined - inter alia - as a sequence or set of instructions in a programming language for a computer to execute. The computer program may be considered a software component.

The computer program may be provided - inter alia - as an executable file and may be provided in the form of source code, i.e., its human-readable form. Source code may need an additional computer program to be executable by a computer because computers regularly can only execute their native machine instructions. Thus, also this additional computer program may be provided or may be part of the computer program. However, the computer program may also be provided without such an additional computer program.

The above given description with respect to the method and the data processing device applies mutatis mutandis to the computer program and vice versa.

Additionally or alternatively, a computer-readable storage medium having stored the above described computer program at least partly thereon may be provided.

That is, the computer-readable storage medium may comprise instructions which, when the instructions are executed by a computer, cause the computer to at least partially execute the method described above.

The computer-readable storage medium may be any digital data storage device, such as a USB flash drive, a hard drive, a CD-ROM, an SD card, or an SSD card.

The above given description with respect to the method, the data processing device and the computer program applies mutatis mutandis to the computer-readable storage medium and vice versa.

Additionally or alternatively, a data signal carrying the above described computer program at least partly thereon may be provided.

That is, the computer program does not necessarily have to be stored on a computer-readable storage medium in order to be made available to the computer, but can also be obtained externally via the data signal, e.g., using the Internet or otherwise.

A spectacle lens may satisfy the specifications of section 3.5.2 of
ISO 13666:2019(E)). In particular, a spectacle lens may be an ophthalmic lens according to section 3.5.1 of ISO 13666:2019(E) to be worn in front of, but not in contact with, the eyeball.

The clear region may be a region of the spectacle lens not having a diffractive structure therein. Accordingly. The clear region may solely provide a refractive power.

The center of the spectacle lens may correspond to an optical center of the spectacle lens according to section 3.2.15 of ISO 13666:2019(E).

As generally used, the term "focal power" is a collective term for the spherical vertex power, which brings a paraxial pencil of parallel light to a single focus and which is usually considered in the prescription by the "sphere" value or, abbreviated, "sph", and the cylindrical vertex power of a spectacle lens, which brings a paraxial pencil of parallel light to two separate line foci mutually at right angles (section 3.10.2 of ISO 13666:2019(E)) and which is usually considered in the prescription by the "cylinder" value or, abbreviated, "cyl". The "vertex power" is the reciprocal of the paraxial vertex focal length (section 3.10.7 of DIN EN ISO 13666:2019(E)). The focal power may comprise the spherical and astigmatic vertex powers (according to section 3.10.7 of ISO 13666:2019(E)) of a spectacle lens according to section 3.5.2 of ISO 13666:2019(E)).

As generally used, the term "emmetropia" relates to a case in which the focal power of the optical components of the eye, i.e. the cornea and the lens, and the focal power of the spectacle lens correcting the refractive errors of the eye are matched to the length of the eye ball, such that a distant point source is focused onto the retina. A deviation of focal power of the spectacle lens of ±0,2 D (which represents a maximum allowed deviation according to DIN EN ISO 8980-1 and 2 for a spectacle lens)or less from a perfect compensation of the refractive errors of the eye may still be considered as providing emmetropia within the context of the disclosure. The emmetropia may be provided for an eye of an (intended) wearer of the spectacle lens having a predetermined refractive error.

The term "ring-shaped" means that the diffractive power region has the shape of a ring. The outer boundary of the diffractive power region may be circular or elliptical. The inner boundary of the diffractive power region may be circular or elliptical having a radius larger than zero.

The term "diffractive add power" relates to a focal power provided by diffractive means. The diffractive add power may add to the refractive power of the respective region of the spectacle lens. The total focal power of the respective region may correspond to a sum of the refractive power and the diffractive add power.

The focal power of the diffractive power region deviating from the focal power of the central region means that the focal power of the diffractive power region does not provide emmetropia. Instead, the focal power of the diffractive region provides a defocus as compared to emmetropia provided in the clear region. The diffractive add power may be an optical power provided by a diffractive structure applied to the spectacle lens. Different regions of the spectacle lens may be provided with different diffractive structures and, hence, with different diffractive add powers. The diffractive structures applied to the spectacle lens may simultaneously provide different diffractive add powers in the same region of the spectacle lens. This may be achieved by providing a diffractive structure having a respective diffraction efficiency. The diffractive power region may comprise multiple zones. For instance, the diffraction efficiency of a diffractive structure in a particular zone of the spectacle lens may be adapted to diffract light into several different diffraction orders. Alternatively or additionally, different zones may be adapted to provide different diffraction efficiencies. For instance, the diffraction efficiency of a diffractive structure in a particular zone of the spectacle lens may be adapted to diffract light into multiple positive diffraction orders and/or into multiple negative diffraction orders and/or into one or more positive and one or more negative diffraction orders. Positive diffraction orders may result in an effective optical power being higher than the optical power provided by the spectacle lens without the diffractive structure and, thus, may result in a shorter effective focal length of the respective zone of the spectacle lens than the respective zone would have without the diffractive structure. Negative diffraction orders may result in an effective optical power being lower than the optical power provided by the refractive power of the spectacle lens and, thus, may result in a longer effective focal length. Different diffraction orders may result in different focal shifts and, hence, may result in different added optical powers to the refractive power of the spectacle lens. A zeroth diffraction order may transmit light without any angular deflection due to diffraction.

The refractive power region relates to a region of the spectacle lens providing a refractive power. The refractive power may relate to a focal power provided by refraction means, i.e. by the refractive properties of the respective region of the spectacle lens.

The focal power of the refractive power region deviating from the focal power of the central region means that the focal power of the refractive power region does not provide emmetropia. Instead, the focal power of the refractive region provides a defocus as compared to emmetropia provided in the clear region. A refractive power may be an optical power governed by refraction of light in the lens material and by a geometrical shape of the spectacle lens, in particular the shape of the front surface and/or the back surface of the spectacle lens. The spectacle lens may exhibit different refractive powers in different regions of the spectacle lens. These different refractive powers may be achieved by providing an according shape of the front surface and/or the back surface of the spectacle lens and/or by providing the spectacle lens with different refractive indices in different regions or parts of the spectacle lens.

The different regions of the spectacle lens, i.e. the clear region, the diffractive power region and the refractive power region may differ from each other by the focal power provided in these regions and/or by the means of providing the respective optical power. Depending on the region, the focal power may be provided by a refractive power and optionally by a diffractive add power.

Some of the regions, in particular the diffractive power region, may comprise multiple zones, which may be arranged in a radially concentric manner. The zones may differ from each other by the radial position and/or extension and/or by the refractive power and/or diffractive add power provided in the respective zone. Moreover, the diffractive power region may comprise multiple zones which may represent Fresnel zones, as described for instance in EP1194797B1. The Fresnel zones may form part of a diffractive structure provided in the diffractive add power region. Each or some of the zones may comprise multiple sub-zones. Each or some of the zones may comprise a main-subzone and a phase-subzone which may be suitable for controlling a relative phase shift of a wave front provided by the different zones, as described for instance in EP1194797B1.

The method may be a computer-implemented method, which means that some or all of the method steps may be carried out by a computer and/or using a computer.

The virtual representation of the spectacle lens may be any kind of information which enables the manufacturing for a spectacle lens having the specifications as provided by the spectacle lens design data. In particular, the virtual representation of the spectacle lens may include information regarding a geometrical shape of the front surface, a back surface and optionally an edge contour. Moreover, the virtual representation of the spectacle lens may include information regarding one or more materials, of which the spectacle lens may consist or which the spectacle lens may comprise. Moreover, the virtual representation of the spectacle lens may include information regarding various parameters specifying the spectacle lens, such as a refractive index, one or more diffractive structures or patterns applied to the spectacle lens, centration information, such as centration points, vision points, a position and/or appearance of at least one optical mark and/or any other characteristics beneficial for manufacturing the spectacle lens. The virtual representation of the spectacle lens may be regarded as a digital twin of the spectacle lens.

Throughout the disclosure, the properties explained for and disclosure provided for a spectacle lens shall be considered as being explained and disclosed for a virtual representation of the spectacle lens and vice versa.

The wearer may be a person suffering from ametropia and in particular from myopia, wherein the spectacle lens and a spectacle lens manufactured according to respective spectacle lens design data may be provided for treating at least partly the ametropia when worn by the wearer. In particular, the wearer may suffer from myopia and one of the purposes of the spectacle lens design data and a corresponding spectacle lens may be mitigating and/or slowing down a progression of the myopia.

The clear region, diffractive power region, and refractive power region are referred to as regions of the spectacle lens. These regions may be arranged in a concentric manner at the spectacle lens. However, alternatively the regions do extend in a non-concentric manner around the central region. The regions may be provided in a circular or non-circular manner. The different regions may relate to different angular ranges of vision when the spectacle lens is worn by a wearer. Regions being arranged at a larger radius of the spectacle lens may relate to angular ranges of the vision having larger viewing angles at which they deviate from a central axis extending through the central region.

The diffractive add power and the refractive power of the spectacle lens may both contribute to the total optical power of the spectacle lens or of a particular region of the spectacle lens. In regions offering only a refractive power, the total optical power may be identical to the refractive power of said region. In regions offering only a diffractive add power, the total optical power may be identical to the diffractive add power of said region. The spectacle lens may have one or more regions offering a refractive power and also a diffractive add power. In these regions, the total optical power may correspond to a combination and/or sum of the diffractive add power and the refractive power.

The subject-matter of the independent claims provides the advantage that the spectacle lens is suitable for controlling or mitigating myopia of a wearer. Due to the clear region in the center of the spectacle lens being adjusted for emmetropia of the wearer, proper vision correction for the wearer may be achieved in the central section. Due to the ring-shaped diffractive power region and the refractive power region arranged radially outside of the diffractive power region each having a focal power deviating from the focal power of the clear region, a defocus can be provided for larger viewing angles as compared to the viewing angles associated with the central clear region. Accordingly, a positive defocus and/or negative defocus may be provided for the larger viewing angles which may optionally result in a blur for the wearer, which may be suitable for controlling myopia and/or mitigating the progression of myopia of the wearer.

In addition, the disclosure provides the advantage that a rather steep increase of the total optical power of the spectacle lens close to the clear zone can be achieved, and still the disadvantages regarding an undesirable shape or profile of the spectacle lens can be avoided. Due to the combination of a diffractive power region close to the clear zone and a refractive power zone at an outer radial position a rather steep increase of the optical power can be achieved by means of one or more diffractive structures, while in the radially outer parts of the spectacle lens the desired optical power may be provided by means of refractive power. This provides the advantage that no undesirable shape of the spectacle lens has to be provided, which would be needed when realizing a steep increase of power close to the clear zone solely by refractive power. Moreover, this provides the additional advantage that no diffractive structures have to be provided in the radially outer parts of the spectacle lens, as in these parts the optical power is provided by means of refractive power of the refractive power zone. Typically, diffractive structures have to be provided with decreasing dimensions, and with a more filigree character, with increasing radius of the spectacle lens. Hence, the larger the radius of the position of the diffractive structure, the smaller the structure has to be. As according to the disclosure the optical power of the spectacle lens in the outer zone, i.e., in the refractive power zone, is provided by a refractive power, providing diffractive structures in the radially outer parts of the spectacle lens may be omitted. Thus, this disclosure provides the additional advantage that the manufacturing effort for manufacturing a spectacle lens according to the disclosure can be kept small and, hence, the manufacturing costs can be reduced as compared to a conventional spectacle lens requiring diffractive structures in the radially outer parts of the spectacle lens.

The clear region may be regarded as clear because it may be provided without any diffractive structure and/or any refractive add power besides an optional refractive power for achieving emmetropia for the wearer. Accordingly, the clear region of the spectacle lens may not comprise a diffractive structure and accordingly may exhibit a diffractive add power of zero. Moreover, the clear region may have a refractive power of zero. Accordingly, the clear region may have a total optical power of zero. This may be in particular the case for a spectacle lens design provided for the sole purpose of treating and/or mitigating the progression of myopia without any further correction of any other ametropia. Alternatively, the clear region may provide a refractive power adjusted for emmetropia of the wearer, i.e., for correcting a further type of the ametropia of the wearer besides the treatment and/or mitigation of the progression of myopia resulting from the defocus provided by the outer regions of the spectacle lens.

The diffractive power region may have a refractive power of zero or a refractive power matching the refractive power of the clear region or deviating from the refractive power of the clear region (12) by ±0,5 D or less. In other words, the diffractive power region may correspond to the clear region regarding its refractive properties. For instance, in particular for a spectacle lens design adapted not to correct any other ametropia but merely to treat and/or mitigate the progression of myopia, the diffractive power region may not provide any refractive power.

The diffractive power region may be adapted to provide a gradually varying diffractive add power in at least one of a radially inner end zone of the diffractive power region or a radially outer end zone of the diffractive power region. This may allow a smooth transition of the diffractive add power between the clear region and the diffractive power region. Alternatively or additionally, this may allow a smooth transition of the total optical power as well as between the diffractive power region and the refractive power region and, hence, provide a continuous profile of the total optical power in the radial direction. For instance, the diffractive add power may be provided by a diffractive structure in the diffractive power region. In the radially inner end zone and the radially outer end zone the diffractive structure may be adapted to have a varying modulation depth, such as an increasing or decreasing depth in the radial direction, respectively.

The diffractive power region may be adapted to provide a constant diffractive add power or a diffractive add power varying by ±0,5 D or less in a central zone of the diffractive power region between the radially inner end zone and the radially outer end zone. The constant diffractive add power may be adjusted to correspond to the intended total optical power of the spectacle lens in the diffractive power region and the refractive power region or may be adapted to result in the intended total optical power when combined with a possible refractive power, if available, of the diffractive power region. This may allow achieving a constant profile of the total optical power in a radial direction over the diffractive power region and the refractive power region.

The diffractive power region may be adapted to provide a radially increasing or radially decreasing diffractive add power in a central zone of the diffractive power region between the radially inner end zone and the radially outer end zone. This may allow achieving a gradually increasing or gradually decreasing total optical power in a radial direction instead of a constant total optical power having a flat profile in radial direction, if desired.

The refractive power region may have a diffractive add power of zero. In particular, there may be no diffractive structures provided in the refractive power region. Accordingly, the total optical power in the refractive power region may be solely provided by the refractive power. This allows refraining from providing diffractive structures in the refractive power region and hence in the radially outer parts of the spectacle lens. This may significantly reduce the manufacturing efforts for the spectacle lens, as there may be no need for providing filigree diffractive structures in the radially outer parts of the spectacle lens. In an overlap region, in which the diffractive power region and the refractive power region may radially overlap, diffractive structures associated with the diffractive power region may at least partly extend into the refractive power region, for instance in an inner end zone of the refractive power region. However, according to the present disclosure this shall not be considered as a diffractive structure being associated with the refractive power region.

The refractive power region may be adapted to provide a gradually increasing refractive power in a radially inner end zone of the refractive power region. The radially inner end zone of the refractive power region may radially overlap with a radially outer end zone of the diffractive power region. The spectacle lens design may be adapted, such that in this overlap region the gradually increasing refractive power of the refractive power region and the gradually decreasing diffractive add power of the diffractive power region contribute to a total optical power having a smooth profile in radial direction. The total optical power in this overlap region may optionally differ by not more than 10% from the total optical power in the refractive power region outside the radially inner end zone and/or from the total optical power of the central zone of the diffractive power region and/or by 0,5 D or less. Hence, the spectacle lens design may be adapted to achieve a smooth profile of the total optical power also in an overlapping region, in which the diffractive power region and the refractive power region are overlapping with each other.

The refractive power region may be adapted to provide a constant or increasing refractive power or a refractive power varying by ±0,5 D or less radially outside of the radially inner end zone of the refractive power region. This may allow achieving a spectacle lens design having a gradually increasing or decreasing total optical power extending over the diffractive power region and the refractive power region. This may be combined with a diffractive power region adjusted to provide a gradually increasing or gradually decreasing optical power in the center zone of the diffractive power region.

A total optical power of the spectacle lens in the central zone of the diffractive power region and radially outside of the radially inner end zone of the refractive power region may exceed the total optical power of the clear region by at least +1 D. Optionally, said total optical power may exceed the total optical power of the clear region by at least +1,5 D or by at least 2 D. Optionally, the total optical power of the spectacle lens in the central zone of the diffractive power region and radially outside of the radially inner end zone of the refractive power region may exceed the total optical power of the clear region by not more than +5 D and optionally by not more than +3 D. This range of added total optical power may allow a treatment and/or mitigation of the progression of myopia for the wearer.

The diffractive power region may be characterized in that it provides a diffractive add power. One or more diffractive structures may be provided in the diffractive power region for achieving the diffractive add power. The spectacle lens may optionally not provide any refractive power in the diffractive power region. Alternatively, the diffractive power region may exhibit the same refractive power as the clear region.

The border between the diffractive power region and the refractive power region may be attributed to the radial position at which the diffractive power and the refractive power have equal contributions to the total optical power. Although in the overlap region a small extension of the diffractive add power may extend into the refractive power region and a small extension of the refractive power may extend into the diffractive power region, the respective contributions may be insignificant. Hence, the diffractive power region is considered as not exhibiting any refractive power and the refractive power region is considered as not exhibit any diffractive add power according to the presented optional embodiment.

Diffractive structures may be applied to one or more surfaces of the spectacle lens, such as the front surface and/or the back surface. Alternatively or additionally, the diffractive structures may be applied within the spectacle lens, i.e., within the bulk material of the spectacle lens. The diffractive structures may be provided by engravings and/or by local variations of the refractive index of the spectacle lens material. Optionally, the diffractive structure(s) may be embedded in an at least dual index structure and/or in a layer structure, which may facilitate providing smooth and cleanable surfaces. Alternatively or additionally, the diffractive structures may be applied by ion beam etching and/or electron etching and/or molding and/or thermal reshaping and/or lathe cutting.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Further optional embodiments will be illustrated in the following with reference to the drawings. The figures show:
Figure 1 a schematic illustration of a spectacle lens design for the purpose of a use of the spectacle lens design for a manufacture of a spectacle lens according to an optional embodiment.
Figure 2 a plot qualitatively showing the diffractive add power, the refractive power, and the total optical power of a spectacle lens manufactured according to the spectacle lens design shown in Figure 1;
Figure 3A an exemplary power profile of a spectacle lens design according to an optional embodiment;
Figure 3B a radial cross-sectional profile of the total optical power of the spectacle lens design of Figure 3A;
Figure 4 a schematic illustration of a method for manufacturing a spectacle lens.

In the drawings the same reference signs are used for corresponding or similar features in different drawings.

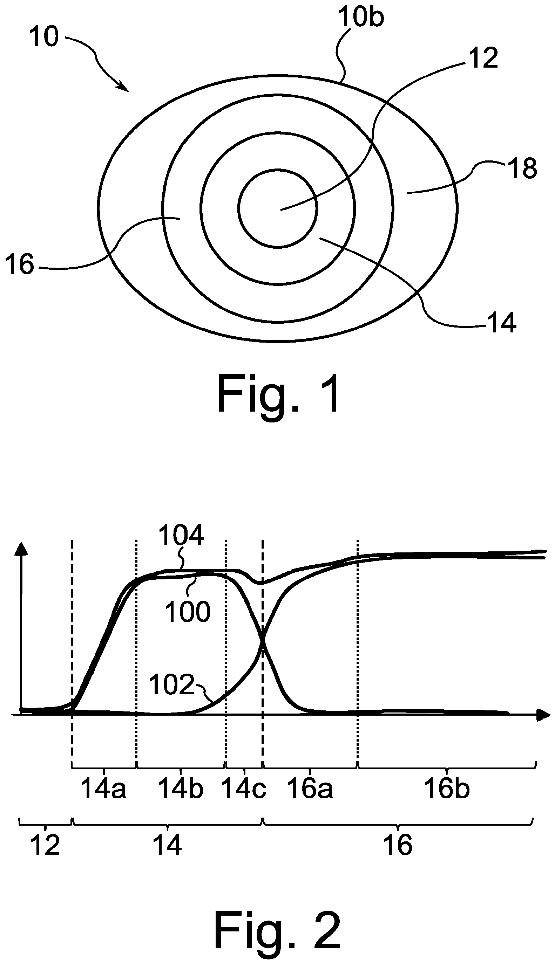

Figure 1 schematically depicts a spectacle lens design for the purpose of a use of the spectacle lens design for a manufacture of a spectacle lens 10 according to an optional embodiment. The spectacle lens 10 design is adjusted such that the spectacle lens 10 has a refractive power and at least partly a diffractive add power. The spectacle lens provides a clear region 12 arranged in the center of the spectacle lens 10 and having a focal power adjusted to provide emmetropia. Moreover, the spectacle lens 10 comprises a ring-shaped diffractive power region 14 arranged radially outside of the clear region 12 deviating from the focal power of the central region (12). The diffractive power region 14 may have a diffractive add power adjusted to provide a focus in front of a retina of an eye of the wearer, for whom the spectacle lens design is provided.

The spectacle lens design further exhibits a refractive power region 16 arranged radially outside of the diffractive power region 14, wherein the refractive power region 16 has a refractive power providing a focal power deviating from the focal power of the central region (12).

The spectacle lens design may optionally comprise radially outside of the refractive region 16 a blank region 18 which may not have any specified optical properties. This region may be cut off when edging the spectacle lens 10. According to other embodiments, the refractive power region 16 may extend until an edge of the spectacle lens design and, in case of a spectacle lens 10, until the edge of the spectacle lens 10.

The spectacle lens 10 according to Figure 1 may for instance increase the total optical power smoothly from prescribed -4.0 D in the center (radius 0 mm) for compensating an ametropia of the wearer beginning at a radius of about 5 mm, to have a peak optical power of about -2 D a radius of about 20 mm with a desired additional 2 D of added optical power. The total optical power is more or less constant for higher field heights, i.e., at larger radii of the spectacle lens 10. The diffractive power region covers a radial range between 5 mm and 20 mm field height in this case. A steeper ramp up may be chosen according to other embodiments.

Figure 2 presents a plot qualitatively showing the diffractive add power 100, the refractive power 102, and the total optical power 104 of a spectacle lens 10 manufactured according to the spectacle lens design 10 shown in Figure 1. The vertical axis indicates the respective power in diopters [D] and the horizontal axis the radius of the spectacle lens 10 in arbitrary units.

The dashed vertical lines and the brackets in the bottom of the graph indicate the clear region 12, the diffractive power region 14 and the diffractive power region 16. In addition, the dotted vertical lines and the brackets underneath the graph indicate the radially inner end zone 14a, the central zone 14b, and the radially outer end zone 14c of the diffractive add power zone 14, as well as a radially inner end zone 16a and an area 16b outside the radially inner end zone 16a of the refractive power zone 16. The border between the diffractive power region 14 and the refractive power region 16 may be attributed to the radial position at which the diffractive add power 100 and the refractive power 102 have equal contributions to the total optical power 104. Although in the overlap region a small extension of the diffractive add power 100 may extend into the refractive power region 16 and a small extension of the refractive power 102 may extend into the diffractive power region 14, the respective contributions may be insignificant. Hence, the diffractive power region 14 is considered as not exhibiting any refractive power and the refractive power region 16 is considered as not exhibiting any diffractive power according to the presented optional embodiment.

According to the presented optional embodiment, the clear region 12 may have a diffractive add power 100 of zero and a refractive power 102 of zero. Likewise, the diffractive power region 14 has a refractive power 102 of zero.

According to other optional embodiments, the clear zone 12 may exhibit a refractive power adjusted for emmetropia of the wearer and the diffractive power region 14 may have a refractive power matching the refractive power of the clear region 12.

The diffractive power region 14 is adapted to provide a gradually varying diffractive add power 100 in at least one of a radially inner end zone 14a of the diffractive power region 14 and in a radially outer end zone 14c of the diffractive power region 14. This allows a smooth transition of the total optical power 104 in the radial direction. In a central zone 14b of the diffractive power region 14 between the radially inner end zone 14a and the radially outer end zone 14c the diffractive power region is adapted to provide a constant diffractive add power 100. As the diffractive power region 14 does not exhibit any refractive power 102, the diffractive add power 100 in the central zone 14b of the diffractive power region 14 may correspond to the intended total optical power 104 for the diffractive power region 14. In an alternative embodiment, the diffractive power region 14 may be adapted to provide a radially increasing or radially decreasing diffractive add power in the central zone 14b of the diffractive power region 14 between the radially inner end zone 14a and the radially outer end zone 14c.

According to the presented embodiment, the refractive power region 16 has a diffractive add power 100 of zero. There may be no diffractive structures provided in the refractive power region 16. Consequently, the total optical power of the spectacle lens in the refractive power region is solely provided by the refractive power. The refractive power region 16 is adapted to provide a gradually increasing refractive power in a radially inner end zone 16a of the refractive power region 16, which allows providing a smooth surface profile of the spectacle lens. Outside of the radially inner end zone 16a, the refractive power region 16 is adapted to provide a constant or increasing refractive power or a refractive power varying by 0,5 D or less in the radial direction.

The total optical power 104 of the spectacle lens 10 in the central zone 14b the diffractive power region 14 and radially outside of the radially inner end zone 16a of the refractive power region 16 exceeds the optical power of the clear region 12 by at least +1 D. With the clear region 12 adjusted for emmetropia of the wearer, this additional optical power in the diffractive power region 14 and the refractive power region 16 results in a positive defocus, such that the focus of the light rays viewed at viewing angles corresponding to the diffractive power region 14 and the refractive power region 16 are focused in the wearer's eye before the retina. This may be beneficial for mitigating and/or treating myopia.

As can be seen in Figure 2, the total optical power 104 exhibits a flat profile throughout the diffractive power region 14 and the refractive power region 16 with a gradual increase from a total optical power of zero in the clear region 12. Merely the region around the interface between the diffractive power region 14 and the refractive power region 1 shows a slight variation of the total optical power 104 due to the total optical power 104 originating in contributions of a varying diffractive power 100 and a varying refractive power 102. However, the quantity of the variation of the total optical power 104 is rather moderate and well below 10% or ±0,5 D of the total optical power 104. This provides smooth optical properties and allows avoiding discontinuities and drastic changes in the surface profiles of the front surface and back surface of the spectacle lens 10.

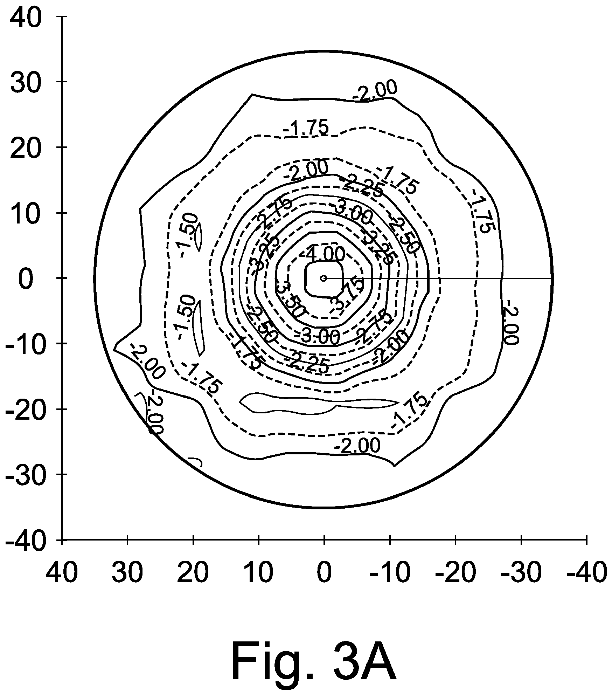

Figure 3A depicts an exemplary power profile of a spectacle lens 10 design according to an optional embodiment, wherein the lines indicate the distribution of the total optical power in diopters. The horizontal axis and the vertical axis indicate the radius in the plane of the spectacle lens 10 in millimeter. As can be seen, the spectacle lens design has a total optical power of about -4,0 D in the center at a radial range from 0 to about 5 mm, i.e., in the clear region 12. The increased density of lines indicates a larger gradient of the optical power, i.e., a stronger increase, in this range as compared to the clear region 12 in the center and the radially outer regions. In the radial range from about 5 mm to about 15 mm the total optical power changes from -4,0 D to about -2,0 D and remains at this value until the edge of the spectacle lens.

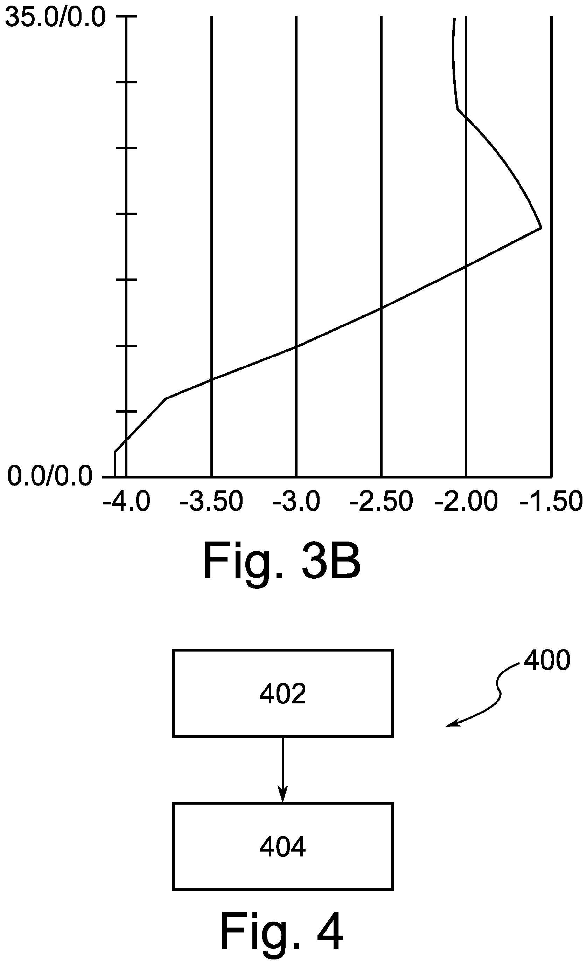

Figure 3B shows a radial cross-sectional profile of the total optical power of the spectacle lens design of Figure 3A, wherein the horizontal axis indicates the total optical power in diopters and the vertical axis indicates the radius in millimeters. This illustrates that at a small radius in the center the total optical power is -4,0 D, which may be chosen for achieving emmetropia for the wearer. With increasing radius, the total optical power increases to about -2,0 D and remains at this value. Hence, the radially outer region has a total optical power exceeding the central total optical power by 2,0 D, which may be beneficial for treating and/or mitigating myopia.

Figure 4 schematically illustrates a method 400 for manufacturing a spectacle lens 10. The method 400 comprises a step 402 of providing a spectacle lens design data according to an embodiment of the disclosure and a step 404 of manufacturing the spectacle lens 10 according to the provided spectacle lens design data.

### List of reference signs

- 10: spectacle lens
- 12: clear region
- 14: diffractive power region
- 14a: radially inner end zone
- 14b: central zone of the diffractive power region
- 14c: radially outer end zone
- 16: refractive power region
- 16a: radially inner end zone
- 16b: region outside the radially outside of the radially inner end zone

- 100: diffractive power
- 102: refractive power
- 104: total optical power

- 400: method for manufacturing a spectacle lens
- 402 - 404: methods steps

## Claims

1. Spectacle lens (10), comprising:
- a clear region (12) arranged in the center of the spectacle lens (10) having a focal power adjusted to provide emmetropia;
- a ring-shaped diffractive power region (14) having a diffractive add power providing a focal power deviating from the focal power of the central region (12);
**characterized in** further comprising:
- a refractive power region (16) arranged radially outside of the diffractive power region (14) having a refractive power providing a focal power deviating from the focal power of the clear region (12).

2. Spectacle lens (10) according to claim 1, wherein the clear region (12) has a diffractive add power of zero.

3. Spectacle lens (10) according to claim 1 or 2, wherein the diffractive power region (14) has a refractive power of zero or a refractive power matching the refractive power of the clear region (12) or deviating from the refractive power of the clear region (12) by ±0,5 D or less.

4. Spectacle lens (10) according to any one of the preceding claims, wherein the diffractive power region (14) is adapted to provide a gradually varying diffractive add power in at least one of a radially inner end zone (14a) of the diffractive power region (14) or a radially outer end zone (14c) of the diffractive power region (14).

5. Spectacle lens (10) according to claim 4, wherein the diffractive power region (14) is adapted to provide a constant diffractive add power in a central zone (14b) or a diffractive add power varying by ±0,5 D or less in the central zone (14b) of the diffractive power region (14) between the radially inner end zone (14a) and the radially outer end zone (14b).

6. Spectacle lens (10) according to claim 4, wherein the diffractive power region (14) is adapted to provide a radially increasing or radially decreasing diffractive add power in a central zone (14b) of the diffractive power region (14) between the radially inner end zone (14a) and the radially outer end zone (14c).

7. Spectacle lens (10) according to any one of the preceding claims, wherein the refractive power region (16) has a diffractive add power of zero.

8. Spectacle lens (10) according to any one of the preceding claims, wherein the refractive power region (16) is adapted to provide a gradually increasing refractive power in a radially inner end zone (16a) of the refractive power (16) region.

9. Spectacle lens (10) according to any one of the preceding claims, wherein the refractive power region (16) is adapted to provide a constant or increasing refractive power or a refractive power varying by ±0,5 D or less radially outside (16b) of the radially inner end zone (16a) of the refractive power region (16).

10. Spectacle lens (10) according to any one of the preceding claims, wherein a total optical power (104) of the spectacle lens (10) in the central zone (14b) of the diffractive power region (14) and radially outside (16b) of the radially inner end zone (16a) of the refractive power region (16) exceeds the total optical power (104) of the clear region (12) by at least +1 D.

11. Data set in the form of a computer-readable data signal comprising at least one kind of the following kinds of data:
(i) a virtual representation of the spectacle lens (10) configured for the purpose of use for manufacturing the spectacle lens (10) according to any one of the preceding claims;
(ii) data containing computer-readable instructions for controlling one or more manufacturing machines to manufacture the spectacle lens (10) according to any one of the preceding claims.

12. Computer-readable storage medium having stored thereon a data set according to claim 11.

13. Method (400) being configured for generating by computer means a spectacle lens design data for a spectacle lens (10), the spectacle lens (10) comprising:
- a clear region (12) arranged in the center of the spectacle lens (10) having a focal power adjusted to provide emmetropia;
- a ring-shaped diffractive power region (14) having a diffractive add power providing a focal power deviating from the focal power of the central region (12);
**characterized in** further comprising:
- a refractive power region (16) arranged radially outside of the diffractive power region (14) having a refractive power providing a focal power deviating from the focal power of the clear region (12).

14. Method (400) according to claim 13 being further configured to manufacture a spectacle lens (10) using the spectacle lens design data.

15. Data processing device comprising a processor configured to perform the method according to claim 13.
